Europäisches Patentamt

European Patent Office

Office européen des brevets

(19)

(11) Veröffentlichungsnummer: **0 089 545**
**B1**

(12) **EUROPÄISCHE PATENTSCHRIFT**

(45) Veröffentlichungstag der Patentschrift:
11.06.86

(51) Int. Cl.⁴: **B 23 C 5/10**, B 23 B 51/04

(21) Anmeldenummer: 83102238.9

(22) Anmeldetag: 08.03.83

(54) Wendeplattenfräser.

(30) Priorität: 18.03.82 DE 3209821

(43) Veröffentlichungstag der Anmeldung:
28.09.83 Patentblatt 83/39

(45) Bekanntmachung des Hinweises auf die Patenterteilung:
11.06.86 Patentblatt 86/24

(84) Benannte Vertragsstaaten:
FR GB IT

(56) Entgegenhaltungen:
CH - A - 553 614
DE - A - 2 358 048
DE - A - 2 848 228
DE - A - 3 005 660
DE - U - 7 935 032
FR - A - 2 334 456
US - A - 3 963 365
US - A - 4 220 429

(73) Patentinhaber: **MONTANWERKE WALTER GMBH,**
**Derendinger Strasse 53 Postfach 2049,**
**D-7400 Tübingen 1 (DE)**

(72) Erfinder: **Gräfe, Werner, Ing. grad.,**
**Friedrich-Ebert-Strasse 53, D-7410 Reutlingen (DE)**

(74) Vertreter: **Rüger, Rudolf, Dr.-Ing. et al,**
**Webergasse 3 Postfach 348, D-7300 Esslingen/Neckar**
**(DE)**

LIBER, STOCKHOLM 1986

**Beschreibung**

Die Erfindung geht aus von einem Wenderplattenfräser zur spanenden Bearbeitung von metallischen Werkstoffen, mit einem Fräserkörper, in dessen am Umfang angeordneten Spannuten in Axialrichtung überlappend schneidende Wendeschneidplatten spiralförmig versetzt in entsprechende Taschen eingesetzt sind und der stirnseitig eine radial innen und eine radial außenliegende Stirnschneide trägt, die in Radialrichtung überlappend schneiden und von denen die radial außenliegende Stirnschneide einen Einstellwinkel von höchstens 90° aufweist und an einer im Bereich der Fräserstirn angeordneten eine Umfangsschneide tragenden Wendeschneidplatte ausgebildet ist, wobei sich zwischen dieser Umfangsschneide und der außenliegenden Stirnschneide eine Nebenschneide befindet und die radial innenliegende, einen Einstellwinkel kleiner als 80° aufweisende Stirnschneide sich über die Fräserachse hinaus erstreckt.

Mit diesem aus dem DE-GM 7 935 032 bekannten Bohrnutenfräser kann in Radial- oder in Axialrichtung oder kombiniert in beiden Richtungen gearbeitet werden. Hierbei ist die Anordnung der Wendeschneidplatten derart getroffen, daß die der Stirnseite benachbarte Umfangsschneide, die radial außenliegende Stirnschneide und die radial innenliegende Stirnschneide an einer einzigen Wendeschneidplatte ausgebildet sind, wobei sich die radial innenliegende Stirnschneide über die Fräserachse hinaus erstreckt, so daß diese Wendeschneidplatte etwa die Gestalt eines länglichen. Sechsecks bekommt. Da die Wendeschneidplatte mit positivem Axialwinkel eingesetzt ist, befindet sich die innenliegende Stirnschneide unterhalb der Mitte, so daß beim Bohren mit dem bekannten Wendeplattenfräser in der Mitte ein zylindrischer Zapfen stehen bleibt, dessen Radius dem Versatz der innenliegenden Schneide gegenüber der Fräserachse entspricht.

Der verbleibende Materialzapfen wird bei fortgesetztem Bohren von dem darüber befindlichen Fräserkörper zur Seite gedrückt und gegebenenfalls abgerissen, was, wie sich herausgestellt hat, zu Beschädigungen der Hartmetallwendeschneidplatte führen kann, wenn der abgerissene Zapfen oder der noch bestehende Zapfenrest unter den rückwärts laufenden Teil der über die Fräserachse hinaus reichenden innenliegenden Schneide gelangt.

Je nach zu bearbeitendem Material ändert Sich die Schnittgeschwindigkeit an den stirnseitigen Schneiden von der Fräserachse bis zum Umfang hin sehr stark, so daß eine für einen in der Nähe des Umfangs liegenden Abschnitts der Schneide günstige Geometrie in der Nähe der Fräserachse sehr ungünstig ist und umgekehrt. Da aber sowohl die innenliegende als auch die außenliegende Stirnschneide an derselben Wendeschneidplatte ausgebildet sind, kann die Schneidengeometrie nicht den jeweils auftretenden Schnittgeschwindigkeiten angepaßt werden, weil eine solche Wendeschneidplatte in einem wirtschaftlich vertretbaren Rahmen nicht herstellbar ist.

Schließlich treten bei dem bekannten Fräser ungünstige Kräfteverhältnisse beim Bohren auf, weil alle beim Bohren aktiven Stirnschneiden auf einer Seite der Fräserachse liegen.

Ausgehend von diesem Stand der Technik liegt der Erfindung die Aufgabe zugrunde, einen Wendeplattenfräser zu schaffen, bei dem bei wirtschaftlich vertretbarem Aufwand die einzelnen stirnseitigen Schneidenabschnitte an die jeweils auftretende Schnittgeschwindigkeit angepaßt werden können und der so weiterzubilden ist, daß eine günstigere Schnittkraftverteilung zustandekommt.

Die Lösung dieser Aufgabe erfolgt durch einen Wendeplattenfräser mit den Merkmalen des Patentanspruches 1.

Dadurch, daß die beiden Stirnschneiden auf zwei Wendeschneidplatten aufgeteilt sind, ergibt sich zusätzlich zu der Möglichkeit, die Schneidengeometrie jeder Wendeschneidplatte getrennt festzulegen, der Vorteil, daß auch unterschiedliche Hartmetallsorten für die stirnseitigen Schneiden verwendet werden können. Außerdem wird durch die besondere Anordnung der innenliegenden Stirnschneide verhindert, daß beim Bohren auf dem dabei entstehenden Kegel ein zylindrischer Materialzapfen stehen bleibt.

Wenn gemäß der Weiterbildung der Erfindung die die innenliegende Stirnschneide bildende Wendeschneidplatte der die außenliegende Stirnschneide bildenden Wendeschneidplatte, bezogen auf die Fräserachse, gegenüberliegt, ergeben sich günstigere Schnittkraftverteilungen, weil dann beim Bohren zu beiden Seiten der Fräserachse aktive Schneiden liegen.

Falls mit dem Wendeplattenfräser breite Nuten gefräst werden sollen, ist es zweckmäßig, die innenliegende Stirnschneide auf mehr als eine Wendeschneidplatte aufzuteilen, die sich, bezogen auf die Fräserachse, abwechselnd gegenüberliegen. Es ist dann unter Umständen zweckmäßig, die den radial am weitesten innenliegenden Abschnitt der innenliegenden Stirnschneide bildende Wendeschneidplatte, bezogen auf die Fräserachse, auf derselben Seite anzuordnen wie die die außenliegende Stirnschneide bildende Wendeschneidplatte.

Je nach dem zu bearbeitenden Material können dann die Einstellwinkel der Wendeschneidplatten unterschiedlich oder gleich gewählt sein.

Mit dem Wendeplattenfräser kann eine Nut mit sehr glattem Nutengrund gefräst werden, wenn die außenliegende Stirnschneide in Bohrrichtung tiefer liegt als der tiefste Punkt der innenliegenden Stirnschneide und eine etwa parallel zu der Fräserachse verlaufende und radial innenliegende Schneide der die außenliegende Stirnschneide bildenden Wendeschneidplatte, beginnend bei der außenliegenden Stirnschneide bis wenigstens zur Höhe des tiefsten Punktes der innenliegenden Stirnschneide freigestellt ist. Hierdurch wird verhindert, daß die am weitesten vorstehende Schneidecke der die innenliegende Schneide bildenden Wendeschneidplatte Riefen im Nutengrund erzeugt.

Entsprechend dem Material des zu bearbeitenden Werkstückes kann die die innenliegende Stirnschneide bildende Wendeschneidplatte mit positivem oder negativem Axialvinkel eingesetzt sein.

Gute Standzeiten der die außenliegende Stirnschneide und die vorderste Umfangsschneide bildenden Wendeschneidplatte werden erhalten, wenn die genannten Schneiden durch eine gerundete oder schräg verlaufende Nebenschneide miteinander verbunden sind.

Bei einem bevorzugten Ausführungsbeispiel beträgt der Einstellwinkel der außenliegenden Stirnschneide 90°.

Ein sehr wirtschaftlicher Wendeplattenfräser für kleine Nutenbreiten ergibt sich, wenn die Wendescheidplatten für die innenliegende Stirnschneide und für die außenliegende Stirnschneide untereinander gleiche Standardrechteckplatten sind.

In jeder Ausführungsform des Wendeplattenfräser können runde, dreieckige, viereckige, sechseckige oder achteckige handelsübliche Wendeschneidplatten verwendet werden, und zwar gegebenenfalls miteinander kombiniert.

In der Zeichnung ist ein Ausführungsbeispiel des Gegenstandes der Erfindung dargestellt. Es zeigen

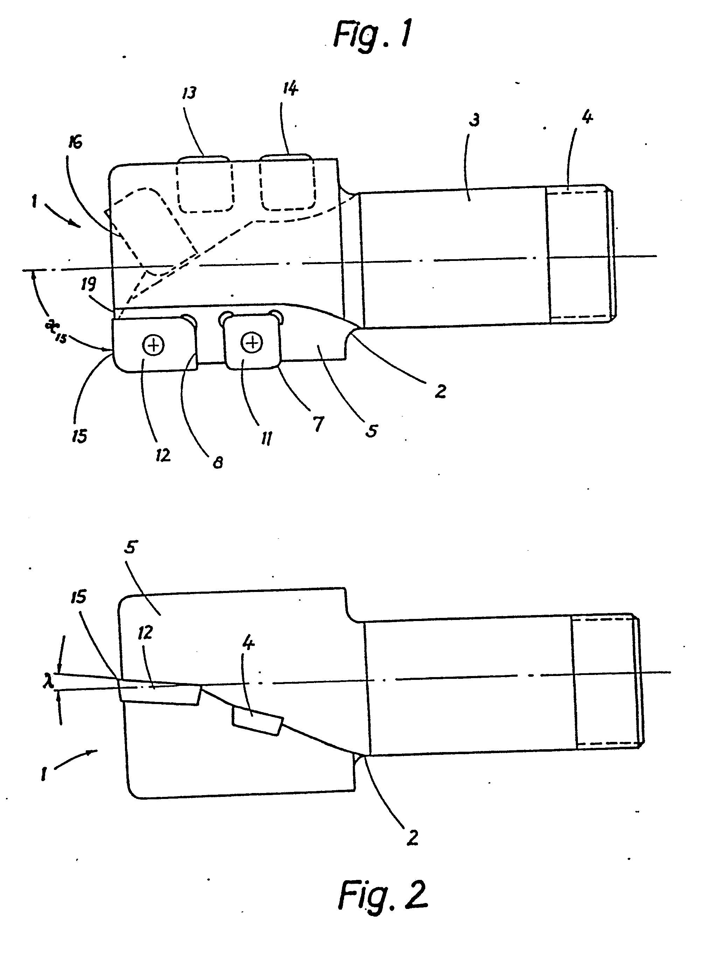

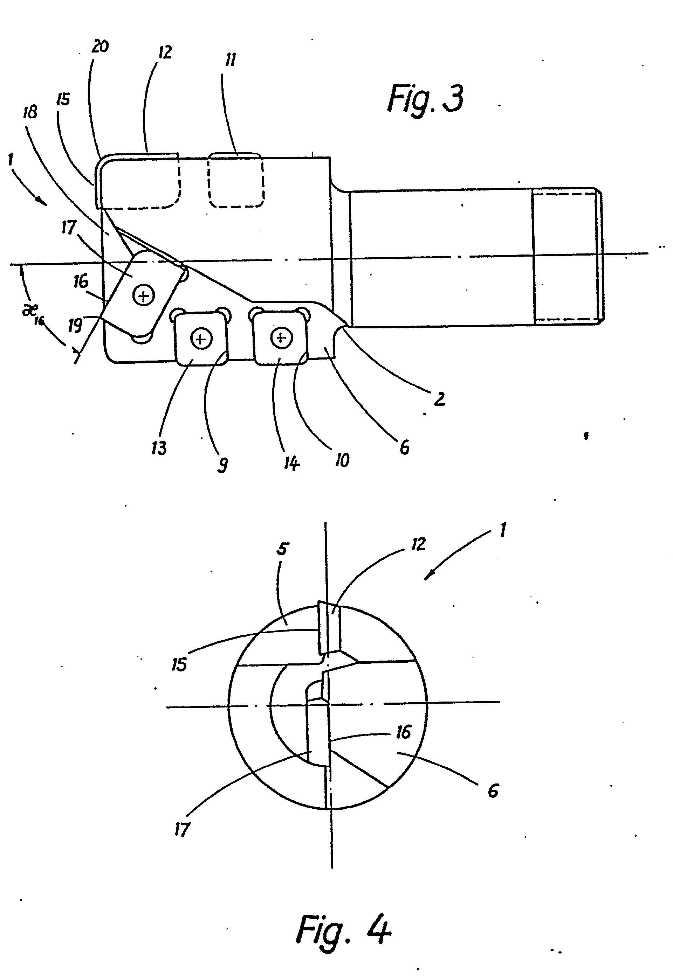

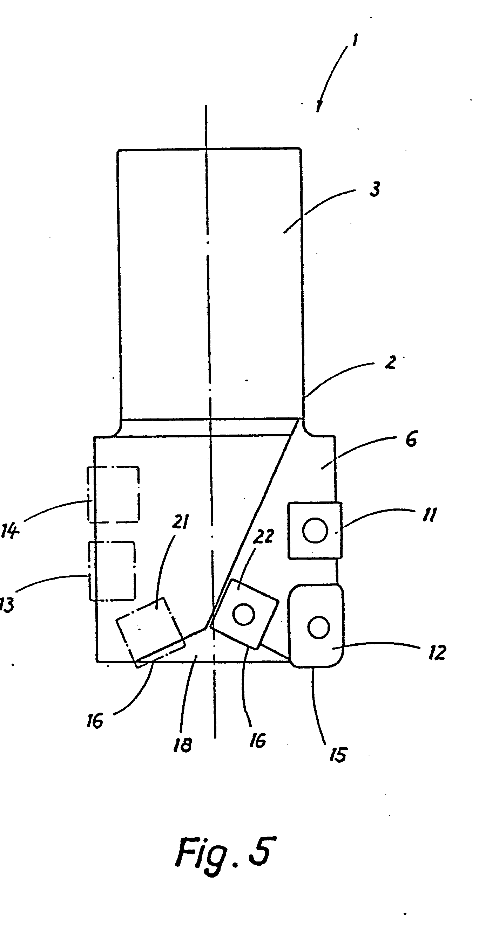

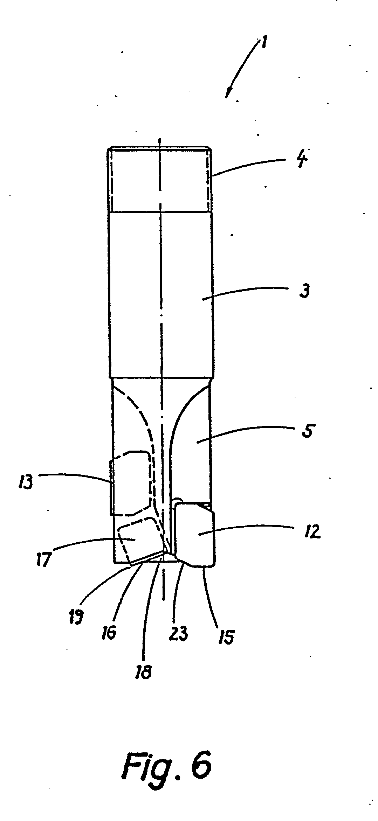

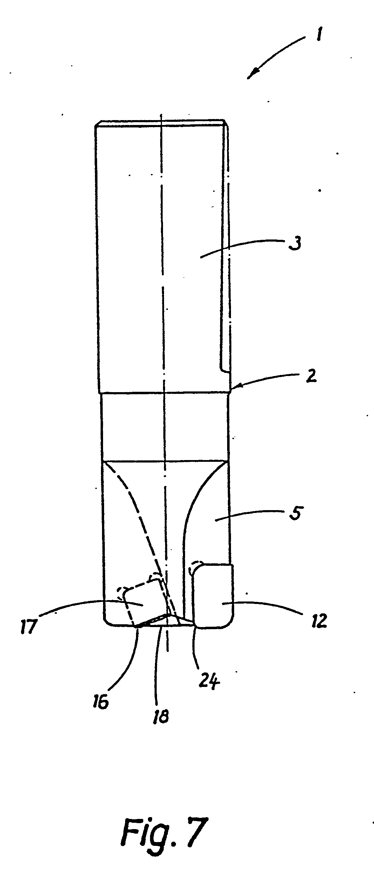

Figur 1 einen Wendeplattenfräser gemäß der Erfindung in einer Seitenansicht, in der die die außenliegende Stirnschneide bildende Wendeschneidplatte sichtbar ist, Figur 2 den Wendeplattenfräser nach Figur 1 in einer gegenüber Figur 1 um 90° gedrehten Seitenansicht, Figur 3 den Wendeplattenfräser nach Figur 1 in einer um 180° gedrehten Seitenansicht, Figur 4 den Wendeplattenfräser nach Figur 1 in einer Stirnansicht, Figur 5 einen Wendeplattenfräser gemäß der Erfindung, bei dem die radial innenliegende Schneide auf zwei Wendeschneidplatten aufgeteilt ist, in einer Seitenansicht, Figur 6 einen Wendeplattenfräser gemäß der Erfindung mit einer Sechseckplatte für die radial außenliegende Stirnschneide für relativ schmale tiefe Nuten, in einer Seitenansicht und Figur 7 einen Wendeplattenfräser gemäß der Erfindung für verhältnismäßig flache Bohrnuten geringer Breite, in einer Seitenansicht.

In den Fig. 1 bis 4 ist ein Wendeplattenfräser 1 veranschalicht, dessen Fräserkörper 2 einen Einspannschaft 3 mit einem Außenanzugsgewinde 4 und zwei etwa spiralförmig verlaufende Spannuten 5 und 6 aufweist. In den in Drehrichtung weisenden Flächen der Spannuten 5 und 6 sitzen in entsprechenden Taschen 7, 8, 9 und 10 Hartmetallwendeschneidplatten 11, 12, 13 und 14, die mit bekannten Befestigungsmitteln, beispielsweise mittels Schrauben, in dem Fräserkörper befestigt sind, wobei die radial außenliegenden Schneidkanten der Wendeschneidplatten 11, 12, 13, 14 die Umfangsschneiden des Wendeplattenfräsers 1 bilden und nach Art einer Schruppverzahnung überlappend schneiden.

Zum Einbohren des Wendeplattenfräsers 1 in ein zu bearheitendes Werkstück trägt dieser stirnseitig zwei in axialer Richtung schneidende Stirnschneiden 15 und 18, die gemeinsam beim Bohren das vor der Fräserstirn befindliche Material abtragen, wobei die Stirnschneide 15 bezogen auf die Fräserachse, radial außen und die Stirnschneide 18, bezogen auf die Fräserachse, radial innen liegt. Die Stirnschneide 15 weist, bezogen auf die Bohrfunktion des Wendeplattenfräsers 1, einen Einstellwinkel $x_{15}$ von 90° auf und ist an der im Bereich der Fräserstirn befindlichen Wendeschneidplatte 12 ausgebildet. Die radial innenliegende Stirnschneide 18 ist von der Schneidkante einer eigenen Wendeschneidplatte 17 gebildet, die in einer entsprechenden Tasche der Spannut 8 sitzt. Der Einstellwinkel $x_{16}$, bezogen auf die Bohrfunktion, ist deutlich kleiner als 80° und liegt im Bereich zwischen 80° und 45°, vorzugsweise im Bereich zwischen 70° und 50°, so daß die innenliegende Stirnschneide 16 beim Bohren einen auf den Wendeplattenfräser 1 zu gerichteten Kegel erzeugt.

Die Wendeschneidplatte 17 ist derart in den Fräserkörper 2 eingesetzt, daß die Stirnschneide 16 die Fräserachse schneidet und ein kurzes Stück darüber hinausragt, wie dies insbesondere aus der Fig. 3 in Verbindung mit Fig. 4 ersichtlich ist. Damit der beim Bohren entstehende Materialkegel nicht an der Fräserstirn anstößt, weist diese eine etwa kegelförmige, durch die Spannut 6 angeschnittene Ausnehmung 18 auf.

Bei dem veranschaulichten Ausführungsbeispiel des Wendeplattenfräsers 1 sind sämtliche Wendeschneidplatten 9, 10, 11, 12 und 17 mit positivem Axialwinkel $\lambda$ eingesetzt, wie dies für die Wendeschneidplatte 12 in Fig. 2 dargestellt ist. Gleichwohl ist es auch möglich, beispielsweise die Wendeschneidplatte 17 mit negativem Axialwinkel $\lambda$ in dem Fräserkörper 2 zu befestigen.

Beim Arbeiten mit dem Wendeplattenfräser 1 wird dieser zunächst in axialer Richtung in das Werkstück vorgeschoben, wobei die stirnseitigen Schneiden 15 und 16 das vor der Fräserstirn befindliche Material abtragen. Hierbei wird durch die innenliegende und die Fräserachse schneidendr Stirnschneide 16 ein Spitzkegel ausgeschnitten. Sobald die richtige Tiefe erreicht ist, wird der Wendeplattenfräser in die gewünschte Richtung seitlich verfahren, wobei nunmehr die durch die Wendeschneidplatten 11, 12, 13, 14 gebildeten Umfangsschneiden das Material aus dem Werkstück abtragen. Zu Beginn der radialen Vorschubbewegung des Wendeplattenfräsers 1 wird durch die radial innenliegende Stirnschneide 16 der durch das Bohren in dem Werkstück entstandene Kegel abgetragen, wobei die Stirnschneide 16, bezogen auf die Fräsrichtung, mit einem Einstellwinkel $\varkappa_{16}$, arbeitet, der gleich dem Komplement des Einstellwinkels $\varkappa_{16}$ ist. Sobald der verbliebene Materialkegel abgetragen ist, ist die Stirnschneide 16 inaktiv.

Anstatt, wie bei dem dargestellten Ausführungsbeispiel des Wendeplattenfräsers 1, die bezogen auf die Bohrrichtung tiefste Stelle 19 der innenliegenden Stirnschneide 16 auf dieselbe Höhe zu legen wie die außenliegende Stirnschneide 15, ist es auch möglich, die Stelle 19 gegenüber der außenliegenden Stirnschneide 15 zurückzuversetzen und eine im wesentlichen parallel zu der Fräserachse verlaufende Schneidkante 19 der Wendeschneidplatte 12, die deren Umfangsschneide gegenüberliegt, beginnend bei der Stirnschneide 15 über eine entsprechende Länge freizustellen, so daß beim radialen Vorschub des Wendeplattenfräsers 1 der beim Bohren entstandene Zylinder mit aufgesetztem Kegel durch die innenliegende Stirnschneide 16 und die Schneidkante 19 abgetragen wird. Bei dieser Anordnung ergibt sich ein sehr glatter Nutengrund.

Anstatt die Nebenschneide 20, die sich im Übergangsbereich zwischen der Stirnschneide 15 und der Umfangsschneide der Wendeschneidplatte 12 befindet, wie dargestellt, abgerundet auszuführen, kann die Nebenschneide 20 auch schräg ausgebildet sein.

Bei entsprechend bearbeiteten Werkstoffen können die Nebenschneiden 12 und 17 entweder gleich oder unterschiedlich, und zwar sowohl bezüglich der Schneidengeometrie als auch des Werkstoffes sein.

In Fig. 5 ist ein weiteres Ausführungsbeispiel des Wendeplattenfräsers 1 veranschaulicht, bei dem Teile, die Teilen des Wendeplattenfräsers 1 nach den Fig. 1 bis 4 entsprechen, mit denselben Bezugszeichen versehen sind. Zum Unterschied zum vorhergehenden Ausführungsbeispiel ist die innenliegende Stirnschneide 16 auf zwei Wendeschneidplatten 21, 22 aufgeteilt, die sich, bezogen auf die Fräserachse, gegenüberliegen und beim Schneiden überlappend arbeiten.

Während bei dem ersten Ausführungsbeispiel die innenliegende Stirnschneide 16, bezogen auf die Fräserachse, der außenliegenden Stirnschneide 15 gegenüberliegt, liegt bei dem Ausführungsbeispiel nach Fig. 5 der am weitesten innenliegende Abschnitt der inneren Stirnschneide 16, bezogen auf die Fräserachse, auf derselben Seite wie die außenliegende Stirnschneide 15 während der außenliegende Teil der inneren Stirnschneide 16 der äußeren Stirnschneide 15, bezogen auf die Fräserachse, gegenüberliegt. Jedoch durchsetzt auch hier die an der Wendeschneidplatte 22 ausgebildete innenliegende Stirnschneide 16 die Fräserachse.

Wenn die innenliegende Stirnschneide 16 auf mehrere Wendeschneidplatten 21, 22 aufgeteilt ist, können diese wahlweise so eingesetzt werden, daß sich, bezogen auf die Bohrfunktion des Wendeplattenfräsers 1, für beide Abschnitte der innenliegenden Stirnschneide 16 gleiche oder unterschiedliche Einstellwinkel 16 ergeben.

Bei dem in Fig. 6 gezeigten Ausführungsbeispiel des Wendeplattenfräsers 1 sind ebenso wie bei dem wendeplattenfräser 1 nach Fig. 7 wiederum gleiche Teile mit denselben Bezugszeichen wie in den Fig. 1 bis 4 bezeichnet.

Bei dem Wendeplattenfräser 1 nach Fig. 6 sind für die Umfangsschneiden lediglich zwei Wendeschneidplatten 12 und 13 vorgesehen, die untereinander gleiche, etwa rechteckförmige Gestalt aufweisen, wobei jedoch angrenzend an die die Stirnschneide 15 bildende Schneidkante eine Nebenschneide 23 in Form einer Fase angeformt oder angeschliffen ist. Die Nebenschneide 23 schließt mit der Fräserachse wiederum einen Einstellwinkel $\varkappa$ im Bereich zwischen 80° und 45° ein.

Die innenliegende Stirnschneide 16 wird durch die Schneidkante einer quadratischen Wendeschneidplatte gebildet.

In Fig. 7 ist ein Wendeplattenfräser 1 für geringe Nutentiefen gezeigt, der deshalb zum Umfangschneiden lediglich mit der Wendeschneidplatte 12 auskommt. Die der Nebenschneide 23 entsprechende Nebenschneide 24 ist eine abgerundete Schneidecke der rechteckigen Wendeschneidplatte 12.

Bei allen dargestellten Ausführungsbeispielen können normale handelsübliche Wendeschneidplatten verwendet werden, die in ihrer Geometrie und Materialbeschaffenheit der jeweiligen Aufgabe angepaßt werden können, da auch im Bereich der Stirnschneiden, an denen beim Bohren stark unterschiedliche Schnittgeschwindigkeiten auftreten, die Schneidarbeit auf mehrere überlappend arbeitende Wendeschneidplatten aufgeteilt ist, wobei bei allen Ausführungsbeispielen die innenliegende Stirnschneide die Fräserachse durchsetzt.

## Patentansprüche

1. Wendeplattenfräser (1) zur spanenden Bearbeitung von metallischen Werkstoffen, mit einem Fräserkörper (2), in dessen am Umfang angeordnete Spannuten (5, 6) in Axialrichtung überlappend schneidende Wendeschneidplatten (11, 12, 13, 14) spiralförmig versetzt in entsprechende Taschen (7, 8, 9, 10) eingesetzt sind, von denen eine Wendeschneidplatte (12) an der Fräserstirn radial außenliegend angeordnet ist, an der wenigstens zwei durch eine Nebenschneide verbundene Hauptschneiden ausgebildet sind, von denen die eine eine Umfangsschneide und die andere eine Stirnschneide (15) bildet deren Einstellwinkel ($\varkappa$) gegenüber der Fräserachse höchstens 90° beträgt und mit wenigstens einer radial innenliegenden Wendeschneidplatte (17), von der eine Hauptschneide eine weitere Stirnschneide (16) darstellt, die sich,die Fräserachse schneidend, über die Fräserachse hinaus erstreckt und einen Einstellwinkel ( ϰ ) zwischen 80° und 45° aufweist, wobei die wenigstens zwei Stirnschneiden (15, 16) überlappend schneidend angeordnet sind.

2. Wendeplattenfräser nach Anspruch 1, dadurch gekennzeichnet, daß die die innenliegende Stirnschneide (16) bildende Wendeschneidplatte (17) der die außenliegende Stirnschneide (15) bildenden Wendeschneidplatte (12), bezogen auf die Fräserachse, gegenüberliegend angeordnet ist.

3. Wendeplattenfräser nach Anspruch 1, dadurch gekennzeichnet, daß die innenliegende Stirnschneide (18) auf mehrere Wendeschneidplatten (21, 22) aufgeteilt ist, die sich, bezogen auf die Fräserachse, abwechselnd gegenüberliegen.

4. Wendeplattenfräser nach Anspruch 3, dadurch gekennzeichnet, daß die den radial am weitesten innenliegenden Abschnitt der innenliegenden Stirnschneide (18) bildende Wendeschneidplatte (22), bezogen auf die Fräserachse, auf derselben Seite liegt wie die die außenliegende Stirnschneide (15) bildende Wendeschneidplatte (12).

5. Wendeplattenfräser nach Anspruch 3, dadurch gekennzeichnet, daß die Einstellwinkel ( $\varkappa_{16}$) der die innenliegende Stirnschneide (18) bildenden Wendeschneidplatten (21, 22) unterechiedlich sind.

6. Wendeplattenfräser nach Anspruch 3, dadurch gekennzeichnet, daß die Einstellwinkel ( $\varkappa_{16}$)der die innenliegende Stirnschneide (16) bildenden Wendeschneidplatten (21, 22) gleich sind.

7. Wendeplattenfräser nach Anspruch 1, dadurch gekennzeichnet, daß die außenliegende Stirnschneide (15) in Bohrrichtung tiefer liegt als der tiefste Punkt (19) der innenliegenden Stirnschneide (16) und daß eine etwa parallel zu der Fräserachse verlaufende und radial innenliegende Schneide der die außenliegende Stirnschneide (15) tragenden Wendeschneidplatte, bis wenigstens zur Höhe des tiefsten punktes (19) der innenliegenden Stirnschneide (16) zurückversetzt ist.

8. Wendeplattenfräser nach Anspruch 1, dadurch gekennzeichnet, daß die die innenliegende Stirnschneide (16) bildende Wendeschneidplatte (17) mit positivem Axialwinkel (λ) eingesetzt ist.

9. Wendeplattenfräser nach Anspruch 1, dadurch gekennzeichnet, daß eine Nebenschneide (20) zwischen der außenliegenden Stirnschneide (15) und der benachbarten Umfangsschneide schräg ausgebildet ist.

10. Wendeplattenfräser nach Anspruch 1, dadurch gekennzeichnet, daß die Wendeschneidplatten (11, 12, 13, 14, 17, 21, 22) für die innenliegenden Stirnschneiden (16) und für die außenliegende Stirnschneide (15) untereinander gleich sind.

## Claims

1.) Turnover-plate-type milling cutter (1) for the swarf-removing machining of metallic materials, having a milling cutter body (2) into whose circumferentially arranged flutes (5, 6) turnover cutting plates (11, 12, 13, 14) which cut with overlap in the axial direction are inserted in spirally offset manner into corresponding sockets (7, 8, 9, 10), of which one turnover cutting plate (12) is arranged lying radially outwards on the milling cutter front, on which at least two main cutting edges connected by a secondary cutting edge are formed, of which the one forms a peripheral cutting edge and the other a front cutting edge (15), the rake angle ($\chi$) of which in relation to the milling cutter axis amounting to 90° at maximum, and having at least one radially inwardly lying turnover cutting plate (17), one main cutting edge of which constitutes a further front cutting edge (16) which, intersecting the milling cutter axis, extends out beyond the milling cutter axis and possesses a rake angle ($\chi$) between 80° and 45°, while the at least two front cutting edges (15, 16) are arranged cutting with overlap.

2.) Turnover-plate-type milling cutter according to Claim 1, characterised in that the turnover cutting plate (17) forming the inwardly situated front cutting edge (16) is arranged lying opposite to the turnover cutting plate (12) forming the externally situated front cutting edge (15), in relation to the milling cutter axis.

3.) Turnover-plate-type milling cutter according to Claim 1, characterised in that the internally situated front cutting edge (16) is divided among several turnover cutting plates (21, 22) which lie opposite to one another in alternation in relation to the milling cutter axis.

4.) Turnover-plate-type milling cutter according to Claim 3, characterised in that the turnover cutting plate (22) forming the section lying radially innermost of the inwardly situated front cutting edge (16) lies, in relation to the milling cutter axis, on the same side as the turnover cutting plate (12) which forms the externally situated front cutting edge (15).

5.) Turnover-plate-type milling cutter according to Claim 3, characterised in that the rake angles ($\chi_{16}$) of the turnover cutting plates (21, 22) which form the inner front cutting edge (16) are different.

6.) Turnover-plate-type milling cutter according to Claim 3, characterised in that the rake angles ($\chi_{16}$) of the turnover cutting plates (21, 22) which form the inner front cutting edge (16) are equal.

7.) Turnover-plate-type milling cutter according to Claim 1, characterised in that the external front cutting edge (15) lies lower in the drilling direction than the lowest point (19) of the inner front cutting edge (16) and in that a cutting edge, extending approximately parallel to the milling cutting plate carrying the externally situated front cutting edge (15) is offset back at

5

least to the level of the lowest point (19) of the inwardly situated front cutting edge (16).

8.) Turnover-plate-type milling cutter according to Claim 1, characterised in that the turnover cutting plate (17) which forms the inwardly situated from cutting edge (16) is inserted with positive axial angle (λ).

9.) Turnover-plate-type milling cutter according to Claim 1, characterised in that a secondary cutting edge (20) between the externally situated from cutting edge (15) and the neighbouring circumferential cutting edge is made oblique.

10.) Turnover-plate-type milling cutter according to Claim 1, characterised in that the turnover cutting plates (11, 12, 13, 14, 17, 21, 22) for the inwardly situated front cutting edges (16) and for the externally situated front cutting edge (15) are similar to one another.

**Revendications**

1. Fraise (1) à plaquettes indexables pour l'usinage avec enlèvement de copeaux de matériauxmétalliques, comprenant un corps (2) dotes de rainures a copeaux (5, 6) disposées sur la périphérie et dans lesquelles des plaquettes indexables (11, 12, 13, 14) coupant en se chevauchant dans le sens axial sont installées décalées en hélice dans des poches correspondantes (7, 8, 9, 10), une plaquette (12) étant disposée radialement à l'extérieur sur la face frontale de la fraise et étant munie d'au moins deux tranchants principaux qui sont raccordés par un tranchant auxiliaire et dont l'un forme un tranchant périphérique et l'autre un tranchant frontal (15) dont l'angle de direction ( $\varkappa$ ) de l'arête coupante est tout au plus de 90° par rapport à l'axe de la fraise, et comprenant au moins un plaquette indexable (17) disposée radialement à l'intérieur et dont un tranchant principal représente un autre tranchant frontal (16) qui, coupant l'axe de la fraise, s'étend audelà de celui-ci et présente un angle de direction ( $\varkappa$ ) de l'arête coupante compris entre 80° et 4S°, au moins les deux tranchants frontaux (15, 16) étant disposés de façon à couper en se chevauchant.

2. Fraise à plaquettes indexables selon la revendication 1, caractérisée par le fait que la plaquette 17 formant le tranchant frontal (16) situé à l'intérieur est disposée par rapport à l'axe de la fraise, du côté opposé à la plaquette (12) formant le tranchant frontal (15) situé à l'extérieur.

3. Fraise à plaquettes indexables selon la revendication 1, caractérisée par le fait que le tranchant frontal (16) situé à l'intérieur est réparti sur plusieurs plaquettes indexables (21, 22) qui sont placées alternativement sur des côtés opposés par rapport à l'axe de la fraise.

4. Fraise à plaquettes indexables selon la revendication 3, caractérisée par le fait que la plaquette (22) formant la section, située le plus loin radialement à l'intérieur, du tranchant frontal interne (16) se trouve, par rapport à l'axe de la fraise, du même côté que la plaquette (12) formant le tranchant frontal (15) situé à l'extérieur.

5. Fraise à plaquettes indexables selon la revendication 3, caractérisée par le fait que les angles de direction ( $\varkappa$ 16) arêtes coupantes des plaquettes (21, 22) formant le tranchant frontal (16) situé à l'intérieur sont différents.

6. Fraise à plaquettes indexables selon la revendication 3, caractérisée par le fait que les angles de direction ( $\varkappa$ 16)des arêtes coupantes des plaquettes (21, 22) formant le tranchant frontal (16) situé à l'intérieur sont égaux.

7. Fraise à plaquettes indexables selon la revendication 1, caractérisée par le fait que le tranchant frontal (15) situé à l'extérieur est placé plus bas dans le sens du perçage que le point le plus bas (19) du tranchant frontal (16) situé à l'intérieur et qu'un tranchant, disposé à peu près parallèlement à l'axe de la fraise et situé radialement à l'intérieur, de la plaquette portant le tranchant frontal (15) situé à l'extérieur est dégagé en arrière jusqu'au moins la hauteur du point le plus bas (19) du tranchant frontal (16) situé à l'intérieur.

8. Fraise à plaquettes indexables selon la revendication 1, caractérisée par le fait que la plaquette (17) formant le tranchant frontal (16) situé à l'intérieur est engagé avec angle axial (1) positif.

9. Fraise à plaquettes indexables selon la revendication 1, caractérisée par le fait qu'un tranchant auxiliaire (20) entre le tranchant frontal (15) situé à l'extérieur et le tranchant périphérique voisin est réalisé oblique.

10. Fraise à plaquettes indexables selon la revendication 1, caractérisée par le fait que les plaquettes (11, 12, 13, 14, 17, 21, 22) pour les tranchants frontaux (16) situés à l'intérieur et pour le tranchant frontal (15) situé à l'extérieur sont identiques entre elles.

*Fig . 1*

*Fig. 2*

Fig. 3

Fig. 4

3

Fig. 5

Fig. 6

Fig.7